# EUROPÄISCHE PATENTSCHRIFT

(11) **EP 1 710 039 B1**
(45) Veröffentlichungstag und Bekanntmachung des Hinweises auf die Patenterteilung: **29.08.2012**
(21) Anmeldenummer: 06005568.8
(22) Anmeldetag: 17.03.2006
(51) Int. Cl.: B23K 11/02, H01T 21/02, B23K 11/00

(54) **Verfahren zum Herstellen einer edelmetallarmierten Elektrode für eine Zündkerze**
Method for producing an electrode for spark plugs with noble metal chip
Procédé pour la fabrication d'une électrode de bougie d'allumage comportant un insert en métal précieux

(30) Priorität: 04.04.2005 DE 102005015413
(43) Veröffentlichungstag der Anmeldung: 11.10.2006
(73) Patentinhaber: Beru Aktiengesellschaft, 71636 Ludwigsburg (DE)
(72) Erfinder: Müller, Helmut, 74394 Hessigheim (DE); Niessner, Werner, 71711 Steinheim (DE)
(74) Vertreter: Kilian, Helmut

(56) Entgegenhaltungen:
- EP-A- 0 418 281
- GB-A- 2 386 855
- US-B1- 6 827 620

## Beschreibung

Die Erfindung betrifft ein Verfahren zum Herstellen einer edelmetallarmierten Elektrode für eine Zündkerze.

Aus der EP 0 418 281 B1 ist es bereits bekannt, eine edelmetallarmierte Elektrode für eine Zündkerze über eine Vielzahl verschiedener Arbeitsschritte herzustellen, die den Transport der Zwischenprodukte zu mehreren Fertigstationen einschließen, so dass das Fertigungsverfahren insgesamt aufwändig und mit großen Fertigungstoleranzen verbunden ist.

Ein Verfahren nach dem Gattungsbegriff des Patentanspruchs 1 ist aus der US-A-6 827 620 bekannt. Bei diesem bekannten Verfahren werden der Edelmetallgrundkörper und das Edelmetallstück zwischen Elektroden angeordnet und dadurch erwärmt, dass durch beide Bauteile ein elektrischer Strom fließen gelassen wird. Dabei wird gleichzeitig das Edelmetallstück in den Elektrodengrundkörper gepresst, wobei das Maß an Bewegung oder die Bewegungsgeschwindigkeit einer der beiden Elektroden überwacht wird und darauf auf das Maß an Bewegung oder die Bewegungsgeschwindigkeit des Edelmetallstücks bezüglich des Elektrodengrundkörpers geschlossen wird. In Abhängigkeit davon wird die Zeitdauer des Stromflusses oder die Stromhöhe eingestellt, um die Einpresstiefe des Edelmetallstücks in den Elektrodengrundkörper zu steuern.

Bei diesem bekannten Verfahren kann es aufgrund der nicht gleichförmigen Aufschmelzung des Materials des Elektrodengrundkörpers nach dem Reduzieren der Höhe des elektrischen Stromes oder nach dem Abschalten des elektrischen Stromes dazu kommen, dass das Edelmetallstück aufgrund der anliegenden Einpresskraft weiter in das aufgeschmolzene Material des Elektrodengrundkörpers gepresst wird, was zu einer gewissen Maßungenauigkeit führt.

Die der Erfindung zugrunde liegende Aufgabe besteht daher darin, ein Verfahren nach dem Gattungsbegriff des Patentanspruchs 1 anzugeben, mit dem eine höhere Maßhaltigkeit beim Ein- und Flachpressen des Edelmetallstücks erzielt werden kann.

Diese Aufgabe wird gemäß der Erfindung durch das Verfahren nach dem Anspruch 1 gelöst.

Bei dem erfindungsgemäßen Verfahren wird ein Elektrodengrundkörper in einer Arbeitsstation positioniert und dort festgehalten und wird dann ein Edelmetallstück über ein Zuführeinrichtung an der Spitze des Elektrodengrundkörpers positioniert. Nach Erwärmung des Elektrodengrundkörpers und dem daran angeordneten Edelmetallstück wird dieses in den Grundkörper eingepresst, wobei nach einem Abkühlen durch Nachpressen das Edelmetallstück flachgedrückt wird. Bei dieser Vorgehensweise erfolgen die Arbeitsschritte der Herstellung der edelmetallarmierten Elektrode entweder in einer einzigen Arbeitsstation oder parallel in mehreren gleichen Arbeitsstationen, was die Zykluszeiten verkürzt. Es wird dabei eine bessere Maßhaltigkeit gewährleistet, da das Einpressen des Edelmetallstücks nicht über den Druck sondern über den Weg bestimmt wird.

Besonders bevorzugte Ausgestaltungen und Weiterbildungen des erfindungsgemäßen Verfahrens sind Gegenstand der Patentansprüche 2 bis 5.

Wenn zusätzlich eine Laserschweißung des Edelmetallstücks am Elektrodengrundkörper vorgesehen wird, lässt sich eine längere Lebensdauer erzielen.

Im Folgenden wird anhand der zugehörigen Zeichnung ein besonders bevorzugtes Ausführungsbeispiel des erfindungsgemäßen Verfahrens näher beschrieben.

Es zeigen
Fig. 1 eine schematische Ansicht einer Vorrichtung in einem ersten Schritt eines Ausführungsbeispiels des erfindungsgemäßen Verfahrens,
Fig. 2 in einer schematischen Ansicht die in Fig. 1 dargestellte Vorrichtung in einem zweiten Schritt des Ausführungsbeispiels des erfindungsgemäßen Verfahrens,
Fig. 3 in einer schematischen Teilansicht die Anordnung bei einem dritten Schritt des Ausführungsbeispiels des erfindungsgemäßen Verfahrens,
Fig. 4 in einer schematischen Teilansicht die Anordnung bei einem vierten Schritt des Ausführungsbeispiels des erfindungsgemäßen Verfahrens und
Fig. 5 eine Schnittansicht durch die Spitze einer nach dem erfindungsgemäßen Verfahren und mit der Vorrichtung hergestellten edelmetallarmierten Elektrode.

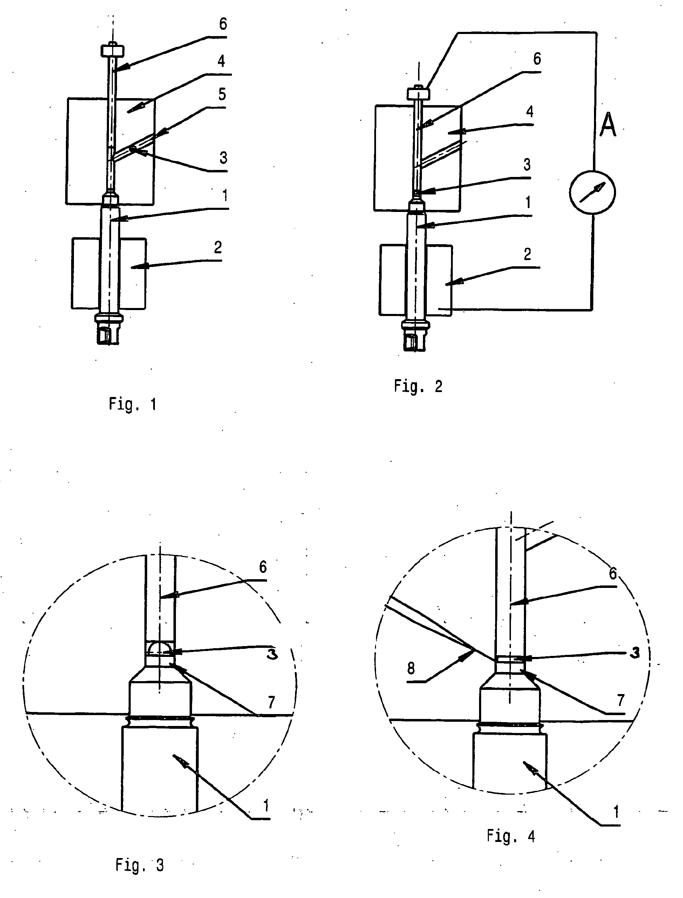

Die in Fig. 1 dargestellte Vorrichtung zum Herstellen einer edelmetallarmierten Elektrode umfasst eine Halteeinrichtung 2, in der ein Elektrodenrohling oder -grundkörper 1 in Form eines zylindrischen Körpers beispielsweise in Form eines Drahtstückes angeordnet wird, und eine Einrichtung 4 zum axialen Zuführen eines Edelmetallstückes 3, beispielsweise einer Edelmetallkugel, zu der Spitze des Elektrodenrohlings 1 und zum Halten eines Press- oder Halte-, insbesondere Niederhaltestempels 6, derart, dass der Pressstempel das Edelmetallstück 3 gegen die Spitze oder Stirnseite des Elektrodenrohlings 1 drücken kann.

Wie es in Fig. 2 dargestellt ist, ist dafür gesorgt, dass ein elektrischer Strom zwischen der Halteeinrichtung 2 und der Einrichtung 4 insbesondere dem darin angeordneten Press- oder Haltestempel 6 fließen kann.

Die entsprechende Stromzufuhr A ist in Fig. 2 dargestellt.

Die in Fig. 1 dargestellte Vorrichtung kann weiterhin eine Laserschweißeinrichtung 8 umfassen, die in Fig. 4 dargestellt ist, und dazu dient, das Edelmetallstück 3 und die Elektrodenspitze 7 miteinander zu verschweißen.

Die oben beschriebene Vorrichtung arbeitet nach dem folgenden Verfahren:

In einem ersten Verfahrensschritt, der in Fig. 1 dargestellt ist, wird ein vorbereiteter Elektrodenrohling der -grundkörper 1 beispielsweise in Form eines Drahtstückes oder eines anderen zylindrischen Körpers in der Halteeinrichtung 2 fest angeordnet und positioniert. Anschließend wird die Einrichtung 4 auf die Spitze oder Stirnseite des Elektrodenrohlings 1 aufgesetzt, derart, dass über einen an der Einrichtung 4 vorgesehenen Zufuhrkanal 5 oder über eine andere Zuführeinrichtung, wie z.B. eine Greifereinrichtung oder eine Unterdruck-Halteeinrichtung ein Edelmetallstück 3 beispielsweise in Form einer Kugel oder eines Zylinders zur Elektrodenspitze geführt werden kann. Das Edelmetallstück 3 wird anschließend an der Spitze, d.h. der Stirnseite des Elektrodenrohlings 1 angeordnet, wobei es zusätzlich durch eine Laserschweißung dort fixiert werden kann.

Im nächsten Verfahrensschritt, der in Fig. 2 dargestellt ist, wird mit dem Press- oder Haltestempel 6 das Edelmetallstück 3 auf die Spitze des Elektrodenrohlings 1 gedrückt. Es wird ein elektrischer Strom über den Press- oder Haltestempel 6 durch den Elektrodenrohling 1 geführt, so dass durch Eigenerwärmung das Elektrodenmaterial zu schmelzen beginnt.

Während dieser Stromzufuhr oder unmittelbar nach dem Abschalten des elektrischen Stromes wird das Edelmetallstück 3 dann in die Spitze des Elektrodenrohlings 1 gedrückt, wie es in Fig. 3 dargestellt ist. Dabei wird ein vordefinierter Einpressweg eingestellt, um die erforderliche Maßgenauigkeit zu erzielen. Der Einpressweg kann als ein tatsächlicher Einpressweg definiert sein oder aber auf ein Funktionsmaß der gesamten Elektrode, wie z.B. den Abstand von der Dichtschulter bis zur Elektrodenspitze eingestellt werden. Ein derartiges Funktionsmaß ist insbesondere beim Nachpressen bevorzugt, da dadurch Längentoleranzen des Elektrodenrohlings ausgeglichen werden. Das angeschmolzene Elektrodenmaterial legt sich an die Oberfläche des Edelmetallstücks 3 an und kann an der Grenzfläche eine Legierung bilden. Nach dem Abkühlen und damit dem Erstarren des geschmolzenen Materials und gegebenenfalls der Legierungsbildung an der Grenzfläche wird durch Nachpressen das Edelmetallstück 3 weiter flachgedrückt, um eine größere Edelmetalloberfläche an der Elektrodenspitze 7 zu erreichen, wie es in Fig. 4 dargestellt ist.

Auch beim Nachpressen wird der Pressweg begrenzt, um eine hohe Maßgenauigkeit zu erreichen. Wie es in Fig. 4 weiterhin dargestellt ist, kann die Verbindung zwischen dem Edelmetallstück 3 und der Elektrodenspitze 7 noch zusätzlich durch eine Laserschweißung 8 verstärkt werden.

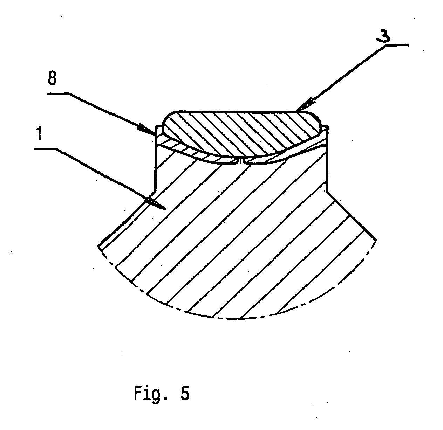

Fig. 5 zeigt eine Schnittansicht durch die Elektrodenspitze des Elektrodenrohlings 1 mit der nach dem oben beschriebenen Verfahren aus dem Edelmetallstück 3 gebildeten Edelmetallarmierung.

An der Grenzfläche zwischen beiden Bauteilen 1, 3 wurde durch Laserschweißen am Umfang eine Legierungsschicht 8 gebildet, die eine Mischung aus dem Edelmetall des Edelmetallstücks 3 und dem Werkstoff des Elektrodenrohlings 1 darstellt. Diese Legierungsschicht 8 dient neben der sicheren Befestigung auch als eine Übergangszone des Wärmeausdehnungskoeffizienten. Diese Übergangszone baut bei thermischer Belastung die Spannungen zwischen den beiden Werkstoffen ab, die durch die verschiedenen Wärmeausdehnungskoeffizienten bedingt sind und bei einem Langzeiteinsatz zum Ablösen des Edelmetallstücks 3 führen könnten.

Es ist besonders vorteilhaft, wenn die Legierungsschicht 8 über den gesamten Querschnitt oder zumindest über den größten Teil des Querschnittes der gebildeten edelmetallarmierten Elektrode reicht.

Die in der oben beschriebenen Weise gebildete Elektrode kann weiter beispielsweise durch Formreduzieren an der Elektrodenspitze bearbeitet werden.

Im Obigen wurde das erfindungsgemäße Verfahren am Beispiel der Herstellung der Mittelelektrode einer Zündkerze beschrieben. Es versteht sich, dass das erfindungsgemäße Verfahren auch zur Herstellung einer Masseelektrode in verschiedenen Formen verwandt werden kann.

Die Form des Edelmetallstückes 3, das der Spitze des Elektrodenrohlings 1 im ersten Verfahrensschritt zugeführt wird, ist nicht auf die Kugelform beschränkt, die oben beschrieben wurde und vorzugsweise vorgesehen ist. Bei dem Edelmetallstück 3 kann es sich um ein Plättchen, einen Rohrabschnitt, eine Zylinder, eine Ring oder einen Verbundwerkstoff aus einem Edelmetall und einem unedlen Metall handeln.

Das erfindungsgemäße Verfahren ermöglicht es, mehrere Arbeitsvorgänge in einer Arbeitsstation zusammenzuführen.

Darüber hinaus besteht die Möglichkeit, die Elektrode in allen Lagen, beispielsweise auch waagrecht herzustellen, d.h. zu bearbeiten.

## Patentansprüche

1. Verfahren zum Herstellen einer edelmetallarmierten Elektrode für eine Zündkerze, bei dem
- an einer Stirnseite eines Elektrodengrundkörpers (1) ein Edelmetallstück (3) angeordnet wird,
- der Elektrodengrundkörper (1) und das daran angeordnete Edelmetallstück (3) erwärmt werden, und
- das Edelmetallstück (3) weggesteuert und nach Maßgabe eines vordefinierten Einpressweges in den Elektrodengrundkörper (1) gepresst wird,
**dadurch gekennzeichnet, dass** nach einem Abkühlen und damit einem Erstarren eines geschmolzenen Materials des Elektrodengrundkörpers (1) und gegebenenfalls einer Legierungsbildung an einer Grenzfläche das Edelmetallstück (3) am Elektrodengrundkörper (1) durch Nachpressen weiter flachgedrückt wird, wobei der Pressweg beim Nachpressen begrenzt ist und das Nachpressen weggesteuert erfolgt.

2. Verfahren nach Anspruch 1, **dadurch gekennzeichnet, dass** das Edelmetallstück (3) axial dem Elektrodengrundkörper (1) zugeführt und daran angeordnet wird.

3. Verfahren nach Anspruch 1 oder 2, **dadurch gekennzeichnet, dass** das Erwärmen des Elektrodengrundkörpers (1) und des daran angeordneten Edelmetallstücks (3) dadurch erfolgt, dass durch beide Bauteile (1, 3) ein elektrischer Strom fließen gelassen wird.

4. Verfahren nach Anspruch 3, **dadurch gekennzeichnet, dass** das Edelmetallstück (3) nach dem Abschalten des Stromflusses eingepresst wird.

5. Verfahren nach einem der vorhergehenden Ansprüche, **dadurch gekennzeichnet, dass** das Edelmetallstück (3) nach dem Einpressen in den Elektrodengrundkörper (1) durch Laserschweißen fixiert wird.

## Claims

1. A method for producing a noble metal-reinforced electrode for a spark plug, in which
- a noble metal piece (3) is arranged on one end face of an electrode main body (1),
- the electrode main body (1) and the noble metal piece (3) arranged thereon are heated, and
- the noble metal piece (3) is pressed into the electrode main body (1) while controlling displacement and according to a predefined pressing-in distance,
**characterised in that** after a cooling process, and hence a solidification of a molten material of the electrode main body (1), and optionally formation of an alloy at a boundary layer, the noble metal piece (3) on the electrode main body (1) is further pressed flat by subsequent pressing, wherein the pressing path during subsequent pressing is limited and subsequent pressing is effected while controlling displacement.

2. A method according to claim 1, **characterised in that** the noble metal piece (3) is fed axially to the electrode main body (1) and arranged thereon.

3. A method according to claim 1 or 2, **characterised in that** heating of the electrode main body (1) and the noble metal piece (3) arranged thereon is carried out by allowing an electric current to flow through both components (1, 3).

4. A method according to claim 3, **characterised in that** the noble metal piece (3) is pressed in after the current flow has been switched off.

5. A method according to any one of the preceding claims 1, **characterised in that** the noble metal piece (3) is fixed by laser welding after being pressed into the electrode main body (1).

## Revendications

1. Procédé de fabrication d'une électrode armée de métal noble pour une bougie d'allumage, où
- une pièce de métal noble (3) est disposée contre une face frontale d'un corps de base (1) d'électrode,
- le corps de base (1) d'électrode et la pièce de métal noble (3) disposée contre celui-ci sont chauffés, et
- la pièce de métal noble (3) est emboutie avec une commande de course dans le corps de base (1) d'électrode, suivant une course d'emboutissage définie,
**caractérisé en ce qu'**après refroidissement et par conséquent solidification d'un matériau fondu du corps de base (1) d'électrode, et, le cas échéant, formation d'un alliage sur une surface de délimitation, la pièce de métal noble (3) est aplatie par emboutissage subséquent contre le corps de base (1) d'électrode, la course d'emboutissage étant limitée pour l'emboutissage subséquent, et celui-ci étant effectué avec une commande de course.

2. Procédé selon la revendication 1, **caractérisé en ce que** la pièce de métal noble (3) est amenée et disposée axialement contre le corps de base (1) d'électrode.

3. Procédé selon la revendication 1 ou la revendication 2, **caractérisé en ce que** le chauffage du corps de base (1) d' électrode et de la pièce de métal noble (3) disposée contre celui-ci est effectué en faisant circuler un courant électrique au travers des deux composants (1, 3).

4. Procédé selon la revendication 3, **caractérisé en ce que** la pièce de métal noble (3) est emboutie après coupure du courant.

5. Procédé selon l'une des revendications précédentes, **caractérisé en ce que** la pièce de métal noble (3) est fixée dans le corps de base (1) d'électrode par soudage au laser après emboutissage.
